(19) Europäisches Patentamt
European Patent Office
Office européen des brevets

(11) Veröffentlichungsnummer: **0 484 722 A1**

(12) **EUROPÄISCHE PATENTANMELDUNG**

(21) Anmeldenummer: **91117951.3**

(22) Anmeldetag: **22.10.91**

(51) Int. Cl.5: **C08L 25/02**, //(C08L25/02, 33:24)

(30) Priorität: **08.11.90 DE 4035486**

(43) Veröffentlichungstag der Anmeldung: **13.05.92 Patentblatt 92/20**

(84) Benannte Vertragsstaaten: **BE DE ES FR GB IT NL**

(71) Anmelder: **BASF Aktiengesellschaft**
**Carl-Bosch-Strasse 38**
**W-6700 Ludwigshafen(DE)**

(72) Erfinder: **Seelert, Stefan, Dr.**
**Albrecht-Duerer-Ring 23 a**
**W-6710 Frankenthal(DE)**
Erfinder: **Klaerner, Peter, Dr.**
**Hauptstrasse 62**
**W-6719 Battenberg(DE)**
Erfinder: **Wagner, Daniel, Dr.**
**Prof.-Dillinger-Weg 44**
**W-6702 Bad Duerkheim(DE)**
Erfinder: **Seitz, Friedrich, Dr.**
**Von-Wieser-Strasse 1**
**W-6701 Friedelsheim(DE)**
Erfinder: **Loth, Wolfgang, Dr.**
**Weinstrasse Süd 58**
**W-6702 Bad Duerkheim(DE)**
Erfinder: **Rieger, Jens, Dr.**
**Hugenottenstrasse 61**
**W-6700 Ludwigshafen(DE)**

(54) **Formmasse.**

(57) Formmasse auf der Grundlage einer mindestens teilverträglichen Mischung eines Styrolpolymeren und eines Polyglutarimids, die - bezogen auf die Summe aus A und B - 50 bis 99 Gew.-% Polystyrol oder Polystyrolacrylnitril (A) bzw. deren Schlagfestmodifizierungen und 1 bis 50 Gew.-% Poly-N-cyclohexylglutarimid (B) enthält.

EP 0 484 722 A1

Polystyrol ist ein preiswerter, gut zu verarbeitender Werkstoff, der aber für manche Anwendungszwecke nicht ausreichend wärmeformbeständig ist. Durch Abmischung mit einem Polymeren, das eine höhere Glastemperatur als Polystyrol besitzt, ist es möglich, die Wärmeformbeständigkeit zu erhöhen und Produkte mit guten mechanischen Eigenschaften zu erhalten; Voraussetzung ist allerdings, daß die Polymeren thermodynamisch verträglich, d.h. mischbar sind.

Chemisch verschiedene Polymere sind aber im allgemeinen nicht miteinander verträglich, d.h. - nach Maßstäben der niedermolekularen Chemie - mischbar bzw. ineinander löslich. Eine Übersicht über mischbare Polymersysteme befindet sich z.B. bei D.R. Paul et al. in J. Macromol. Sci. - Rev. Macromol. Chem. C18(1), 109-168 (1980). Als äußeres Kennzeichen der vollständigen Mischbarkeit wird das Auftreten von nur einer Glastemperatur oder die Entstehung von klaren Proben oder Filmen angegeben (vgl. J. Brandrup/ E.H. Immergut, Polymer Handbook, 3. Aufl. VI/347-370). Teilverträglichkeit liegt vor, wenn die Blends zwar zweiphasig sind, die Glastemperaturen der Mischungspartner sich aber, verglichen mit denen der reinen Polymeren, merklich aufeinanderzu bewegt haben.

Als mischbare Systeme, die als eine Komponente Polystyrol enthalten, werden von D.R. Paul et al, loc. cit. nur Polystyrol/Polyvinylmethylether, Polystyrol/Tetramethylbisphenol-A-polycarbonat und Polystyrol/Polyphenylenether (PPE) angegeben. Weiterhin ist bekannt, daß Polymere von Cyclohexylmethacrylat oder Cyclohexylacrylat bzw. deren Copolymere mit Methylmethacrylat molekular verträglich sind mit Polystyrol (vgl. DE 36 32 369).

Bekannt ist auch, daß Polymethylmethacrylat und Styrolacrylnitrilcopolymere, wenn der Acrylnitrilgehalt im SAN zwischen 10 und 30 Gew.-% liegt, miteinander molekular mischbar sind (D.R. Paul et al., loc. cit.). Durch Mischung von Poly-2,6-dimethyl-1,4-phenylenether, der eine Glastemperatur von 209 ° C aufweist, mit Polystyrol kann die Wärmeformbeständigkeit erhöht werden. Ein Nachteil dieser Mischungen ist aber die gelb-braune Eigenfarbe des PPE und die rasche Vergilbung der Blends, die auch durch UV-Stabilisierung nicht völlig verhindert werden kann.

Ein weiteres Beispiel für ein verträgliches Polymersystem sind Mischungen aus Glutarimidgruppen enthaltenden Polymeren und Styrolacrylnitrilcopolymeren. Solche Mischungen werden in EP 95 274 genannt. In J 61 009 459 werden Mischungen aus Glutarimidgruppen enthaltenden Polymeren und Vinylpolymeren beschrieben. Und in EP 216 505 wird ein Verfahren zur Herstellung von Imidgruppen enthaltenden Polymeren und Blends daraus angegeben, wobei die entstehenden Polymere in Abhängigkeit des Imidierungsgrades einen genau definierten Gehalt an Säure- und/oder Anhydrid-Gruppen enthalten. Die in diesen Schriften angegebenen Beispiele sind Mischungen mit Glutarimidgruppen enthaltenden Polymeren, die durch Reaktion von Methylamin mit Polymethacrylaten entstanden sind.

So wird in EP 216 505 gelehrt, daß Copolymere aus Styrol und Acrylnitril mit einem Acrylnitrilgehalt von 25 Gew.-% und Polyglutarimid, das durch Umsetzen von Polymethylmethacrylat mit Methylamin hergestellt wurde, molekular verträglich sind, und daß sich die Wärmeformbeständigkeit der Mischungen deutlich erhöht. Zum Veredeln von Styrolacrylnitrilcopolymeren, die einen Acrylnitrilgehalt unter 25 Gew.-% aufweisen oder von Homopolystyrol sind durch Umsetzen mit Methylamin hergestellte Polyglutarimide allerdings nicht geeignet, da die entsprechenden Mischungen unverträglich sind. Überraschenderweise wurde gefunden, daß die bei der Umsetzung von Cyclohexylamin mit Methylmethacrylat gebildeten Poly-N-cyclohexylmethacrylimide mit Homopolystyrol und Polystyrolacrylnitril auch bei einem Acrylnitril-Gehalt von unter 25 Gew.-% verträglich, d.h. mindestens teilweise oder vollständig mischbar sind.

Unmittelbarer Erfindungsgegenstand ist eine Formmasse auf der Grundlage einer mindestens teilverträglichen Mischung eines Styrolpolymeren und eines Polyglutarimids, die enthält - bezogen auf die Summe aus A und B - 50 bis 99 Gew.-% Polystyrol oder Polystyrolacrylnitril (A) und 1 bis 50 Gew.-% Poly-N-cyclohexylglutarimid (B).

Bevorzugt enthält die erfindungsgemäße Formmasse 75 bis 99 Gew.-% A und 1 bis 25 Gew.-% B; bevorzugt sind Formmassen, die Polystyrolacrylnitril mit einem Acrylnitril-Anteil von bis zu 25 Gew.-%, insbesondere 1 bis 20 Gew.-%, bezogen auf A, enthalten. Unter Polystyrol wird Homopolystyrol und schlagfestes Polystyrol verstanden, ebenso soll Polystyrolacrylnitril auch das entsprechende schlagfest modifizierte Produkt (ABS) umfassen. Für die Demonstration der Mischbarkeit (Verträglichkeit) sind auch Mischungen von etwa gleichen Teilen von A und B geeignet.

Das erfindungsgemäß verwendete Poly-N-cyclohexylglutarimid kann erhalten werden durch polymeranaloge Umsetzung von Polymethyl(meth)acrylat mit Cyclohexylamin, wie nachstehend näher beschrieben wird.

Polystyrol (A) im Sinne der Erfindung ist Polystyrol oder Polystyrolacrylnitril, wie es in bekannter Weise in Masse, Lösung, Suspension oder wäßriger Emulsion erhalten wird. Vorzugsweise wird ein in Masse polymerisiertes Styrolpolymerisat eingesetzt. Das Styrolpolymerisat kann eine Kautschukkomponente zur Schlagzähmodifizierung enthalten. Dieses schlagfeste Styrolpolymerisat kann durch Polymerisation von

Styrol und - falls gewünscht - der Comonomeren in Gegenwart eines Kautschuks oder durch Einmischen der Kautschukkomponente in das Styrolpolymerisat hergestellt werden. Unter Kautschuk werden Polymerisate verstanden, die eine Glastemperatur unter -20°C aufweisen. In Frage kommen dabei insbesondere Polybutadien, Polyisopren oder Pfropf- oder Blockmischpolymerisate, die aus Butadien und/oder Isopren oder Alkylacrylaten und darauf gepfropften Styrol oder substituierten Styrolen und möglicherweise weiteren Comonomeren bestehen. Die Verfahren zur Herstellung von Styrolpolymerisaten sind bekannt und werden z.B. in "Ullmanns Encyklopädie der technischen Chemie", 4. Auflage, Band 19, Seiten 265 bis 295, Verlag Chemie, Weinheim oder H. Gerrens, Chem. Ing. Tech. 52 (1980), 477 beschrieben.

Poly-N-cyclohexylglutarimid ist ein Polymer vom Typ eines Polyglutarimids, das bis zu 99 %, und vorzugsweise zwischen 10 und 95 %, N-Cyclohexylglutarimid-Einheiten der Struktur (I) enthält

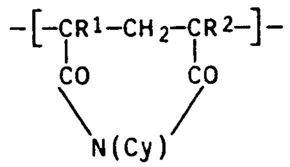

(I),

wobei Cy Cyclohexyl bedeutet und $R^1$ und $R^2$ unabhängig voneinander Wasserstoff oder substituiertes oder unsubstituiertes Alkyl oder Aryl mit 1 bis 20 C-Atomen oder Mischungen daraus sein können.

Dieses Glutarimid-Polymere kann durch Umsetzen entsprechender Polyacrylate mit Cyclohexylamin, z.B. in Lösung (vgl. EP 234 726) oder durch Reaktion in einem Extruder (US 4 246 374, EP 216 505) erhalten werden. Bevorzugtes Polyacrylat ist Polymethylmethacrylat. Die bei der vorstehend beschriebenen Umsetzung entstehenden Polymeren enthalten immer Carbonsäure- und/oder Anhydrid-Gruppen, die unerwünscht sind, da sie z.B. die Mischbarkeit mit anderen Polymeren und die Fließfähigkeit herabsetzen. Wie in EP 216 505 beschrieben, kann durch Zugabe von Reagenzien, die mit den Carbonsäure-Gruppen reagieren, wie z.B. Orthoestern, Ketalen, Carbonaten oder Sulfoxiden der Anteil an Carbonsäure- bzw. Carbonsäureanhydrid-Gruppen kontrolliert, d.h. vermindert werden.

Die erfindungsgemäße Formmasse aus (A) und (B) kann zur weiteren Verbesserung der Eigenschaften Zusatzstoffe (C) enthalten, wie sie für derartige Polymerisate üblich und gebräuchlich sind. Bei diesen Zusatzstoffen handelt es sich z.B. um Wärme- oder Lichtstabilisatoren, Gleit- oder Entformungsmittel, Färbemittel wie Farbstoffe oder Pigmente, Flammschutzmittel oder Verstärkungsmittel.

Die Herstellung der Mischungen kann durch Schmelzemischen in üblichen Mischvorrichtungen wie Knetern, Banburymischern oder Ein- oder Zweischneckenextrudern oder auch durch Mischen in Lösung mit anschließendem Verdampfen des Lösungsmittels oder mit Fällen in einem Nichtlösungsmittel erfolgen.

Beispiele

Zur versuchsweisen Herstellung der erfindungsgemäßen Formmassen wurden die jeweiligen Bestandteile in THF in einer Konzentration von jeweils 10 Gew.-% gelöst, die Lösungen im Verhältnis 1:1 gemischt und anschließend durch Ausgießen in Methanol die Polymeren gefällt. Die ausgefallenen Polymermischungen wurden getrocknet und bei 200°C zu Plättchen gepreßt. Die optische Erscheinung der Preßplättchen wurde beurteilt und die Glasübergangstemperaturen der Polymermischungen wurden durch DSC (Differential Scanning Calorimetry) mit einem 912 DSC Gerät der Firma DuPont Instruments ermittelt. Die Ergebnisse dieser Untersuchungen und die dabei eingesetzten Komponenten sind in den nachfolgenden Tabellen angegeben.

Die Bestimmung der Viskositätszahlen VZ erfolgte nach DIN 53726 jeweils an 0,5 %igen Lösungen bei 23°C.

Die Komponente A1 war ein handelsübliches, durch Radikalpolymerisation erhaltenes Standardpolystyrol mit einer Viskositätszahl VZ von 96 ml/g, gemessen in Toluol (Polstyrol 158 K der BASF). Als Komponenten A2 bis A4 wurden statistische Copolymere aus Styrol und Acrylnitril eingesetzt, die in bekannter Weise durch radikalische Polymerisation in einem kontinuierlich durchflossenen Rührkessel hergestellt wurden, um chemisch einheitlich aufgebaute Polymere zu erhalten. Die Komponenten A1 bis A4 sind in Tabelle 1 aufgelistet.

Tabelle 1

| | Acrylnitril-Gehalt (Gew.-%) | VZ in DMF (Toluol) (ml/g) | Tg(°C) |
|---|---|---|---|
| A1 | 0 | 96 | 106 |
| A2 | 7 | 68 | 103 |
| A3 | 11 | 68 | 106 |
| A4 | 15 | 69 | 108 |
| A5* | 25 | 43 | 109 |

* Vergleichsmaterial

N-Cyclohexyl-Gruppen enthaltendes Polyglutarimid wurde durch Umsetzung von Cyclohexylamin mit PMMA (VZ 54 ml/g in Chloroform, Lucryl G 66 der BASF) in einem Extruder nach dem in US 4 246 374/EP 216 505 beschriebenen Verfahren mit anschließender Rückesterung mit Trimethyl-o-formiat hergestellt. Die Eigenschaften verschiedener Poly-N-cyclohexylglutarimide B1 bis B3 sind in Tabelle 2 zusammengestellt.

Zum Vergleich wurden die N-Methyl-Gruppen enthaltenden Polyglutarimide Kamax T 240 (B4) und EXL 4261 (B5) der Firma Rohm und Haas verwendet. Die Eigenschaften dieser Produkte sind ebenfalls in Tabelle 2 aufgeführt.

Der Imidierungsgrad wurde durch Elementaranalyse bestimmt.

Der Gesamtgehalt der Säure- und Anhydridgruppen wurde durch Titration bestimmt. Dazu wurde das Polymer in einer Mischung (1:1) aus Methanol/Methylendichlorid gelöst, mit 0,1 n Natriumhydroxid-Lösung versetzt und mit 0,1 n Salzsäure zurücktitriert. Der Gehalt an funktionellen Gruppen ist in Milliäquivalenten pro Gramm imidierbares Polymer angegeben.

Tabelle 2

| | N-Gehalt (%) (Gew.-%) | Imidierungsgrad (%) | Säuregruppenzahl (meq/g) | VZ in Chloroform (ml/g) | Tg(°C) |
|---|---|---|---|---|---|
| B1 | 3,3 | 39 | 0,60 | 61 | 154 |
| B2 | 3,2 | 38 | 0,44 | 61 | 150 |
| B3 | 3,2 | 38 | 0,32 | 62 | 149 |
| B4* | 6,3 | 74 | 0,07 | | 142 |
| B5* | 7,4 | 87 | 0,03 | | 156 |

* Vergleichsmaterial

Die in Tabelle 3 aufgeführten Mischungen beziehen sich jeweils auf Styrolcopolymer A4 (Glastemperatur 108°C).

Tabelle 3

| Beispiel | Polyglutarimid | Glastemperatur des Polyglutarimids | gemessene Glastemperatur | Transparenz |
|---|---|---|---|---|
| 1 | B1 | 154°C | 125°C | klar |
| 2 | B2 | 150°C | 123°C | klar |
| 3 | B3 | 149°C | 122°C | klar |
| V1* | B4 | 142°C | 113/148°C | opak |
| V2* | B5 | 156°C | 111/160°C | opak |

*Vergleichsversuch

Die Beispiele 4 bis 6 und die Vergleichsversuche 3 und 4 verwenden als Styrolpolymerisat die Komponente A3 (Glastemperatur 106°C).

Die erfindungsgemäßen Mischungen gemäß Beispiel 1 bis 3 (Tabelle 3) sowie 4 bis 6 (Tabelle 4) sind offenbar verträglich. Die Preßplättchen sind klar, und es wird nur eine Glastemperatur beobachtet. In den Vergleichsversuchen V1 und V2 sowie V3 und V4 erkennt man die Unverträglichkeit am Auftreten zweier Glastemperaturen und zusätzlich an der mangelnden Transparenz.

Tabelle 4

| Beispiel | Polyglutarimid | Glastemperatur des Polyglutarimids | gemessene Glastemperatur | Transparenz |
|---|---|---|---|---|
| 4 | B1 | 154 °C | 123 °C | klar |
| 5 | B2 | 150 °C | 124 °C | klar |
| 6 | B3 | 149 °C | 122 °C | klar |
| V3 | B4 | 142 °C | 109/144 °C | opak |
| V4 | B5 | 156 °C | 109/159 °C | opak |

In Tabelle 5 sind Vergleichsversuche auf der Grundlage der Komponente A5 (Glastemperatur 109 °C) aufgeführt (V5-V9). Mischungen eines Styrolacrylnitrilcopolymerisats mit 25 Gew.-% Acrylnitril sind sowohl mit Poly-N-cyclohexylglutarimid als auch mit Poly-N-methylglutarimid verträglich. Diese Mischungen sind nicht erfindungsgemäß.

Tabelle 5

| Beispiel | Polyglutarimid | Glastemperatur des Polyglutarimids | gemessene Glastemperatur | Transparenz |
|---|---|---|---|---|
| V5 | B1 | 154 °C | 122 °C | klar |
| V6 | B2 | 150 °C | 126 °C | klar |
| V7 | B3 | 149 °C | 123 °C | klar |
| V8 | B4 | 142 °C | 126 °C | klar |
| V9 | B5 | 156 °C | 129 °C | klar |

In Tabelle 6 sind Beispiele mit Komponente A2 (Glastemperatur 103 °C) aufgeführt.

Tabelle 6

| Beispiel | Polyglutarimid | Glastemperatur des Polyglutarimids | gemessene Glastemperatur | Transparenz |
|---|---|---|---|---|
| 7 | B2 | 150 °C | 115/135 °C | transluzent |
| 8 | B3 | 149 °C | 120 °C | klar |

Man erkennt mit Polyglutarimid B3 Verträglichkeit der Komponenten und mit Polyglutarimid B2 Teilverträglichkeit.

Aus Tabelle 7 wird ersichtlich, daß zwischen Polystyrol 158 K (Komponente A1) und Polyglutarimid B3 Teilverträglichkeit besteht.

Tabelle 7

| Beispiel | Polyglutarimid | Glastemperatur des Polyglutarimids | gemessene Glastemperatur | Transparenz |
|---|---|---|---|---|
| 9 | B3 | 149 °C | 117/140 °C | klar |

## Patentansprüche

1. Formmasse auf der Grundlage einer mindestens teilverträglichen Mischung eines Styrolpolymeren und eines Polyglutarimids, enthaltend - bezogen auf die Summe aus A und B -

A: 50 bis 99 Gew.-% Polystyrol, schlagfestes Polystyrol, Polystyrolacrylnitril oder schlagfestes Polystyrolacrylnitril (A) und
B: 1 bis 50 Gew.-% Poly-N-cyclohexylglutarimid (B).

**2.** Formmasse nach Anspruch 1, enthaltend 75 bis 99 Gew.-% A und 1 bis 25 Gew.-% B.

**3.** Formmasse nach Anspruch 1, enthaltend Polystyrolacrylnitril oder schlagfestes Polystyrolacrylnitril mit einem Gehalt an Acrylnitril von jeweils 25 Gew.-% oder weniger.

**4.** Formmasse nach Anspruch 1, enthaltend Poly-N-cyclohexylglutarimid, wie es erhalten wird durch polymeranaloge Umsetzung von Polymethyl(meth)acrylat mit Cyclohexylamin und eventuelle Nachbehandlung des Umsetzungsproduktes mit Mitteln zur Eliminierung von Carboxyl- oder Carbonsäureanhydrid-Einheiten.

Europäisches Patentamt

# EUROPÄISCHER RECHERCHENBERICHT

Nummer der Anmeldung

EP 91 11 7951

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | EP-A-0 095 274 (ROHM AND HAAS COMPANY)<br>* Seite 3, Zeile 6-8 *<br>* Ansprüche 1-2,4-7 *<br>--- | 1-2 | C08L25/02<br>//(C08L25/02, 33:24) |
| D,Y | US-A-4 246 374 (RICHARD M. KOPCHIK)<br>* Spalte 3, Zeile 40 - Zeile 56 *<br>--- | 1-2 | |
| A | EP-A-0 382 167 (MONTEDIPE S.R.L.)<br>* Seite 2, Zeile 43 - Seite 3, Zeile 33 *<br>* Ansprüche 1-2 *<br>----- | 1-2 | |
| | | | **RECHERCHIERTE SACHGEBIETE (Int. Cl.5)** |
| | | | C08L |

Der vorliegende Recherchenbericht wurde für alle Patentansprüche erstellt

| Recherchenort | Abschlußdatum der Recherche | Prüfer |
|---|---|---|
| DEN HAAG | 06 FEBRUAR 1992 | SIEMENS T. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)